# EUROPEAN PATENT SPECIFICATION

(11) **EP 2 104 696 B1**
(45) Date of publication and mention of the grant of the patent: **11.09.2013**
(21) Application number: 07865225.2
(22) Date of filing: 05.12.2007
(51) Int. Cl.: C08G 18/16, C08G 18/40, C08G 18/48, C08G 18/50, C08G 18/63, C08J 9/00

(54) **POLYURETHANE CATALYSIS BASED ON THE COMBINATION OF AUTOCATALYTIC POLYOL AND UREA**
AUF EINER KOMBINATION AUS AUTOKATALYTISCHEM POLYOL UND HARNSTOFF BASIERTE POLYURETHANKATALYSE
CATALYSE DE POLYURÉTHANE À PARTIR DE LA COMBINAISON DE POLYOL AUTOCATALYTIQUE ET D'URÉE

(30) Priority: 21.12.2006 US 876386 P
(43) Date of publication of application: 30.09.2009
(73) Proprietor: Dow Global Technologies LLC, Midland, MI 48674 (US)
(72) Inventor: SONNEY, Jean-marie, 8834 Schindellegi (CH); CASATI, Francois, 8808 Pfaffikon (CH); WOODS, Thomas, 8832 Wollerau (CH); WUILAY, Herve, 8123 Ebmatingen (CH)
(74) Representative: Raynor, John
(86) International application number: PCT/US2007/086486
(87) International publication number: WO 2008/079614

(56) References cited:
- EP-A- 0 624 611
- US-A- 3 042 631
- DOW PLASTICS: 'Voranol and Voralux Polyols for flexible slabstock foam' SWITZERLAND,

## Description

### BACKGOUND OF THE INVENTION

The present invention pertains to a process of using an autocatalytic polyol with urea as low emission catalysts in the production of polyurethane products.

Polyether polyols based on the polymerization of alkylene oxides, and/or polyester polyols, are the major components of a polyurethane system together with isocyanates. Polyols can also be filled polyols, such as SAN (Styrene/Acrylonitrile), PIPA (polyisocyanate polyaddition) or PHD (polyurea) polyols, as described in "Polyurethane Handbook", by G. Oertel, Hanser publisher. These systems generally contain additional components such as blowing agents, cross-linkers, chain extenders, surfactants, cell regulators, stabilizers, antioxidants, flame retardant additives, eventually fillers, and typically catalysts such as tertiary amines and/or organometallic salts.

Tertiary amine catalysts generally have a strong odor and many are highly volatile due to their low molecular weight. The release of the tertiary amine during foam processing may present safety and toxicity concerns and the release of residual amine during customer handling is undesirable. The release of tertiary amine catalysts vapor in polyurethane products is also reported to be detrimental to vinyl film and polycarbonate sheets exposed thereto. Fugitive amines are also associated with fogging issues, that is, deposit of solids or liquid film on an automotive wind-shield.

Various solutions are proposed to reduce the emission of the volatile catalyst. One proposed solution is the use of amine catalysts which contain a hydrogen isocyanate reactive group, i.e. a hydroxyl or a primary and/or a secondary amine. Such compounds are, for instance, disclosed in EP Publications 677,540; 747,407 and EP 1,109,847; and in U.S. Patents 3,448,065; 4,122,038; 4,368,278 and 4,510,269. A reported advantage of such catalyst compositions is the amines are incorporated into the polyurethane product. However, such reactive catalysts have to be used at high levels in the polyurethane formulation to compensate for their lack of mobility during the foaming reactions. Furthermore since most of such (polyols) catalysts are monofunctional, they act as chain stoppers. Hence these reactive amine catalysts have a detrimental effect on the polymer build and affect polyurethane product physical characteristics, especially foam aging.

Use of specific amine-based polyols is proposed in EP 539,819, in U.S. Patent 5,672,636, and in WO Publications 01/ 58,976, 02/22702, 03/016373, 03/029320 and 03/55930. These polyols possess autocatalytic characteristics, i.e. they act as catalysts per se and are incorporated into the polymeric structure. Other types of autocatalytic polyols are those containing a tertiary amine in the propylene oxides/ethylene oxide chain.

While these autocatalytic polyols are better in foam aging than reactive amines, experience shows they do not consistently give a balanced reactivity profile between blowing (water-isocyanate) and gelling (polyol-isocyanate) reactions during foaming. Furthermore, they are often not sufficiently catalytically active by themselves for the blowing reaction when water level is lower than 5 parts per hundred parts of polyol. Hence co-catalysis with reduced amounts of fugitive catalysts, such as triethylenediamine and bis-dimethylamionoethyl-ether, are often added.

Urea is reported as a co-catalyst in some applications. For example U.S. Patent 3,479,304 describes the use of 1 to 5 parts of urea per 100 parts polyol to avoid severe shrinkage associated with tertiary amine catalyst. The addition of urea in formulations for the production of flexible foam where 5 to 15 parts of water is disclosed in U.S. Patent 4,981,878. Urea is also reported as a catalyst in formulation for a semi-rigid foam (U.S. Patent 4,134,610) and in combination with additional low molecular weight volatile amines (DD 292 467. The use level is generally above 0.5 parts per hundred parts of polyol which can cause fogging issues.

There continues to be a continuing need for improvements in reducing the amount of volatile organic compounds (VOC), and associated fogging issues, in polyurethane compositions by use of alternative catalysts while maintaining properly balanced polyurethane reactions.

It has surprisingly been found that there is a synergistic effect when amine based, autocatalytic polyols are used with urea as a co-catalyst.

It is an object of the present invention to produce polyurethane products having reduced VOC's by using low levels of urea as a co-catalyst with amine based, autocatalytic polyols. The use of such polyols and urea allows the production of polyurethane products in the absence or reduction of conventional amine based catalysts while giving a more balanced reaction profile between thee foaming and gelling reactions than the autocatalytic polyol itself. With the elimination of conventional amine catalysts, the disadvantages associated with such catalysts can be avoided.

It is another object of the invention to have a process to adjust reactivity, such as foaming and/or gelation rates, by using a combination of autocatalytic polyols and urea.

### SUMMARY OF THE INVENTION

In one embodiment, the present invention is a process for the production of a polyurethane foam by reaction of a mixture of
(a) at least one liquid organic polyisocyanate with
(b) a polyol composition comprising;
(b1) from 0 to 99 percent by weight of a polyol compound having a nominal functionality of 2 to 8 and a hydroxyl number of from 15 to 300 mg KOH/gram; and
(b2) from 1 to 100 by weight of at least one polyol compound having a nominal functionality of 2 to 8, a hydroxyl number of from 15 to 800, preferably 300 or less mg KOH/gram and containing at least one tertiary amine group providing autocatalytic function;
   wherein the weight percent of polyol is based on the total amount of polyol composition (b) and the sum of (b1) and (b2) is 100;
(c) from 0.05 to below 0.3 percent urea based on (b);
(d) 0.5 to 10 parts of water based on (b); and
(e) optionally additives or auxiliary agents known per se for the production of polyurethane foams, including catalysts.

In another embodiment the present invention is A process for the production of a flexible slabstock foam by reaction of a mixture of
(a) at least one liquid organic polyisocyanate with
(b) a polyol composition comprising;
(b1) from 75 to 99 percent by weight of a polyol compound having a nominal functionality of 2 to 8 and a hydroxyl number of from 15 to 300 mg KOH/gram; and
(b2) from 1 to 25 by weight of at least one polyol compound having a nominal functionality of 2 to 8, a hydroxyl number of from 15 to 800 mg KOH/gram and containing at least one tertiary amine group providing autocatalytic function;
wherein the weight percent of polyol is based on the total amount of polyol composition (b) and the sum of (b1) and (b2) is 100;
(c) from 0.05 to below 0.3 percent urea based on (b);
(d) 0.5 to 10 parts of water based on (b); and
(e) optionally additives or auxiliary agents known per se for the production of polyurethane foams, including catalysts.

In another embodiment, the present invention is A process for the production of a flexible molded foam by reaction of a mixture of
(a) at least one liquid organic polyisocyanate with
(b) a polyol composition comprising;
(b1) from 0 to 70 percent by weight of a polyol compound having a nominal functionality of 2 to 8 and a hydroxyl number of from 15 to 300 mg KOH/gram; and
(b2) from 30 to 100 by weight of at least one polyol compound having a nominal functionality of 2 to 8, a hydroxyl number of from 15 to 300 mg KOH/gram and containing at least one tertiary amine group providing autocatalytic function;
wherein the weight percent of polyol is based on the total amount of polyol composition (b) and the sum of (b1) and (b2) is 100;
(c) from 0.05 to below 0.3 percent urea based on (b);
(d) 0.5 to 10 parts of water based on (b); and
(e) optionally additives or auxiliary agents known per se for the production of polyurethane foams, including catalysts.

In a further embodiment, the present invention is a polyol composition comprising i) from 0 to 99 percent by weight of a polyol compound having a functionality of 2 to 8 and a hydroxyl number of from 15 to 300 mg KOH/gram and
ii) from 1 to 100 by weight of at least one polyol compound having a functionality of 2 to 8, a hydroxyl number of from 15 to 800, preferably less than 500, and more preferably less than 300, mg KOH/gram and containing at least one tertiary amine group providing autocatalytic function,
   wherein the weight percent of polyol is based on the total amount of polyol composition;
iii) from 0.05 to below 0.3 percent urea based on i) and ii); and
(d) 0.5 to 10 parts by weight water.

The present invention is also to a clathration complex between an amine based polyol and urea.

In another embodiment, the present invention is a process whereby there is no other catalyst besides amine based, autocatalytic polyols (b2) and urea.

In another embodiment, polyol (b2) is combined with urea and a metal salt.

In another embodiment, the present invention is a process whereby autocatalytic polyol (b2) is an alkylene oxide adduct of an initiator bearing N-methyl and/or N,N-dimethyl amino groups, or is capped with N-methyl and/or N,N-dimethyl or a pyrrolidine group or an imidazole.

In another embodiment, the present invention is a process whereby polyol (b2) is a blend of amine initiated and amine capped polyols.

In another embodiment, the present invention is a process whereby the blowing agent (d) is only water.

In another embodiment, the present invention is a process whereby the polyurethane product is a flexible foam.

In another embodiment, the present invention is a process whereby the flexible foam is a slabstock foam.

In another embodiment the present invention is a process whereby the polyurethane foam is molded.

In another embodiment, the present invention is a process whereby the foam is a viscoelastic or semi-rigid foam.

In another embodiment the present invention is a process whereby the polyurethane foam density is less than 70 kg/m3.

In another embodiment, the present invention is a process as disclosed above wherein the polyisocyanate (a) contains at least one polyisocyanate that is a reaction product of an excess of polyisocyanate with an amine based, autocatalytic polyol.

In a further embodiment, the present invention is a process as disclosed above where the polyol (b) contains a polyol-terminated prepolymer obtained by the reaction of an excess of polyol with a polyisocyanate wherein the polyol is defined by (b2).

The invention further provides for polyurethane products produced by any of the above processes.

### DETAILED DESCRIPTION OF THE INVETION

In accordance with the present invention, a polyol formulation and the use of the formulation for producing polyurethane products is provided, whereby the polyurethane products can be produced with no or reduced levels of volatile tertiary amine catalysts. The elimination or reduction of volatiles resolves issues associated with emission of such compounds. The use of such a polyol formulation also provides a polyurethane catalyst system which gives good processing, i.e. a minimal level of scrap, while the physical characteristics of the polyurethane product made therefrom, such as load-bearing, tear strength, tensile strength and elongation, as well as resistance to aging, fogging, etc, are not adversely affected and may even be improved by the reduction/elimination of conventional or reactive amine.

These advantages are achieved by including in the polyurethane foam formulation at least one amine based autocatalytic polyol (b2) and urea. The use of a combination of autocatalytic polyols and urea provides a polyurethane system which gives good cure, i.e. short cycle times, while amine catalyst level is minimized and VOC's are reduced.

As used herein the term polyols are those materials having at least one group containing an active hydrogen atom capable of undergoing reaction with an isocyanate. Preferred among such compounds are materials having at least two hydroxyls, primary or secondary, or at least two amines, primary or secondary, carboxylic acid, or thiol groups per molecule. Compounds having at least two hydroxyl groups or at least two amine groups per molecule are especially preferred due to their desirable reactivity with polyisocyanates.

Suitable polyols (b) that can be used to produce polyurethane foams of the present invention are well known in the art and include those described herein and any other commercially available polyol and/or SAN, PIPA or PHD copolymer polyols. Such polyols are described in "Polyurethane Handbook", by G. Oertel, Hanser publishers. Mixtures of one or more polyols and/or one or more copolymer polyols may also be used to produce polyurethane products according to the present invention.

Representative polyols include polyether polyols, polyester polyols, polyhydroxy-terminated acetal resins, hydroxyl-terminated amines and polyamines. Natural oil based polyols can also be used. Examples of these and other suitable isocyanate-reactive materials are described more fully in U.S. Patent 4,394,491. Alternative polyols that may be used include polyalkylene carbonate-based polyols and polyphosphate-based polyols. Preferred are polyols prepared by adding an alkylene oxide, such as ethylene oxide, propylene oxide, butylene oxide or a combination thereof, to an initiator or blend of initiators to give a final polyol a nominal functionality having from 2 to 8, preferably 2 to 6 active more preferably 2.1 to 4 active hydrogen atoms. Catalysis for this polymerization can be either anionic or cationic, with catalysts such as KOH, CsOH, boron trifluoride, or a double cyanide complex (DMC) catalyst such as zinc hexacyanocobaltate, or quaternary phosphazenium compounds. In the case of alkaline catalysts, these are eliminated from the polyol at the end of production by a proper finishing step, such as coalescence, magnesium silicate (magsil) separation, ion exchange or less preferably by acid neutralization. In the case of DMC catalyst produced polyols, the finishing step can be avoided.

The polyols or blends thereof employed depend upon the end use .of the polyurethane foam to be produced. The hydroxyl number and molecular weight of the polyol or polyols employed can vary accordingly over a wide range. In general, the hydroxy number of the polyols employed for use in producing a flexible or visco-elastic foam may range from 15 to 300.

In the production of a flexible polyurethane foam, the polyol is preferably a polyether polyol and/or a polyester polyol or a polyetherester polyol. The polyol generally has an average functionality ranging from 2 to 5, preferably 2 to 4, and an average hydroxyl number ranging from 15 to 300 mg KOH/g, preferably from 20 to 200, and more preferably from 20 to 70mg KOH/g. As a further refinement, the specific foam application will likewise influence the choice of base polyol. As an example, for molded foam, the hydroxyl number of the base polyol may be on the order of 20 to 60 with ethylene oxide (EO) capping, and for slabstock foams the hydroxyl number may be on the order of 25 to 75 and is either mixed feed EO/PO (propylene oxide) or is only slightly capped with EO or is 100 percent PO based.

In the production of a visco-elastic foam, polyols having a functionality as for flexible foam can be used, however; the polyol or polyol blend will preferably contain polyols having a hydroxyl number from 150 to 300 mg KOH/g. For the production of semi-rigid foams or microcellular elastomers, it is preferred to use a trifunctional polyol with a hydroxyl number of 30 to 80.

The initiators for the production of polyols (b1) generally have 2 to 8 functional groups that will react with the alkylene oxide and do not contain nitrogen. Examples of suitable initiator molecules are water, organic dicarboxylic acids, such as succinic acid, adipic acid, phthalic acid and terephthalic acid and polyhydric, in particular dihydric to octahydric alcohols or dialkylene glycols, for example ethanediol, 1,2- and 1,3-propanediol, diethylene glycol, dipropylene glycol, 1,4-butanediol, 1,6-hexanediol, glycerol, trimethylolpropane, pentaerythritol, sorbitol and sucrose or blends thereof.

All or part of polyols of (b1) can also be based on or derived from renewable resources such as natural and/or genetically modified (GMO) plant vegetable seed oils and/or animal source fats. Examples of preferred vegetable oils include, for example, those from castor, soybean, olive, peanut, rapeseed, corn, sesame, cotton, canola, safflower, linseed, palm, sunflower seed oils, or a combination thereof. Preferably sources or renewable polyols are derived from soybean and/or castor and/or canola oils.

For use in the production of flexible polyurethane foam it is generally desirable to modify the natural materials to give the material isocyanate reactive groups or to increase the number of isocyanate reactive groups on the material. Preferably such reactive groups are a hydroxyl group. Such modifications of a renewable resource include, for example, epoxidation, as described in US Patent 6,107,433 or in US Patent 6,121,398; hydroxylation, such as described in WO 2003/029182; esterification such as described in US 6,897,283; 6,962,636 or 6,979,477; hydroformylation as described in WO 2004/096744; grafting such as described in US 4,640,801; or alkoxylation as described in US 4,534,907 or in WO 2004/020497. After the production of such polyols by modification of the natural oils, the modified products may be further alkoxylated. The use of EO or mixtures of EO with other oxides, introduce hydrophilic moieties into the polyol.

A natural oil based polyols may also be obtained by a combination of the above modification techniques as disclosed in PCT Publications WO 2004/096882 and 2004/096883, and Applicant's copending application Serial No. 60/676,348 entitled "Polyester Polyols Containing Secondary alcohol Groups and Their Use in Making Polyurethanes Such as Flexible Polyurethane Foams".

The amine based, autocatalytic polyol (b2) is generally a liquid at room temperature and is preferably substantially free of any alkali metals used in production of the polyol, such as potassium, sodium or cesium. The polyol accelerates preferably the addition reaction of organic polyisocyanates with polyhydroxyl or polyamino compounds, but may also be active on the reaction between the isocyanate and waster. The combination of autocatalytic polyols (b2) will be used in the present invention together with conventional polyols (b1), including copolymer polyols of the SAN, PHD or PIPA type.

In general, the properties of the autocatalytic polyols can vary widely as described above for polyol (b1) in terms of number average molecular weight, hydroxyl number, functionality, etc. When (b2) is the predominant polyol used in a formulations, the hydroxyl number, functionality etc. will generally be as described above for the particular desired foam characteristics. When (b2) is not the predominant polyol in the formulations, the hydroxyl number, functionality etc. can deviate substantially from the normal values used in a particular application. By less than the predominant polyol component means less than 25 percent, generally less than 15, preferably less than 10 and in some applications less than 5 percent by weight of the total polyol component. Thus, for example, when producing a slabstock foam the level of (b2) polyol may be less than 5 percent by weight of the total polyol. Generally polyol (b2) will be present as at least 1 weight percent of the polyol. In such cases the hydroxyl number of the polyol will not have an adverse affect on the final foam and can vary over a wide range, generally from 20 to 800. Preferably the hydroxyl number is 600 or less. More preferably in such applications the hydroxyl number is 500 or less. In one embodiment, the hydroxyl number of polyol (b2) will be within the range of polyol (b1), that is, from a lower number of 15 to 20 and higher number of 300 or less, more preferably 200 or less.

As the hydroxyl number of the polyol increases, the catalytic activity of the polyol increases. This increase in catalytic activity is generally believed to be due to an increase in the concentration of tertiary amines per polyol on a weight bases, hence increased basicity. Conversely, in making a slabstock foam, polyol (b1) is generally used at a level of 75 or greater weight percent of the total polyol. When producing a molded foam, (b2) is generally used at a level of at least 30 wt% of the total polyol and may comprise 100 % of the polyol. For molded foam, (b2) may be 95 wt% or less of the total polyol or even 90 wt% or less of the total polyol. In another embodiment, (b2) comprises at least 40 wt% of the polyol formulation for a molded foam. In a further embodiment, (b2) comprises at least 50 wt% of the polyol formulation for a molded foam.

Autocatalytic polyols (b2) contain at least one polyol containing a tertiary amine group in the polyol chain, a polyol initiated with an initiator containing a tertiary amine or a polyol partially capped with a tertiary amine group. Examples of linear and cyclic amine compounds containing a tertiary amine for use as initiators include N-methyl-1,2-ethanediamine, N-Methyl-1,3-propanediamine, N,N-dimethyl-1,3-diaminopropane, N,N-dimethylethanolamine, 3,3'-diamino-N-methyldipropylamine, N.N-dimethyl-1,4-diaminobutane, N,N-dimethyl-1,3-diaminopropane, N,N-dimethyldipropylenetriamine, aminopropyl-imidazole, N-aminoethylpiperazine, N-(aminoalkyl)-pyrrolidine, N-(2-aminoethyl)-aziridine, or mixtures thereof. Preferably the initiator contains at least one N-alkyl amino group, where the alkyl group contains from 1 to 6 carbon atoms and preferably from 1 to 3 carbon atoms. In one preferred embodiment, the alkyl group is methyl. In another preferred embodiment, the initiator contains at least one N,N-dialkyl amino group where the alkyl is as previously described.

Examples of suitable initiators containing a tertiary amine are disclosed in EP Publications 488 291 and 539,819, in U.S. Patents 5,476,969 and 5,672,636, and in WO Publications 01/ 58,976, 02/22702, 03/016373, and 03/029320.

They can also be capped with a tertiary amine, following, for instance the process described in WO 03/55930. The amine can also be incorporated in the PO/EO chain of the polyol or be part of a polymer as described in WO 2004/060956.

Amine based polyol (b2) with autocatalytic characteristics can be also those containing a tertiary nitrogen in the chain, by using for instance an alkyl-aziridine as comonomer with PO and EO, or (b2) can be polyols capped with a tertiary amine, by using for example a N,N-dialkyl-glycidylamine as taught in US 3,428,708.

Other amine based, autocatalytic polyols (b2) are those containing at least one imine linkage and at least one tertiary amine group, for instance such as those made by reaction of an epoxy resin having an EEW (epoxy equivalent weight) of at least 150, with the phenol group of salicyladehyde, and subsequent reaction of the aldehyde moiety with a tertiary amine bearing a primary amine group, such as, for instance, N-(aminoalkyl)-pyrrolidine, or 3-dimethylamino-1-propylamine or 1(3-aminopropyl)-imidazole. Processes for the production of such polyols are described in WO2005/063840.

In one preferred embodiment, the autocatalytic polyol has a molecular weight of from about 500 to about 12,000 and is prepared by alkoxylation of at least one initiator molecule of the formula

HₙA-(CH₂)ₙ-N(R) - (CH₂)ₚ-AHₙ Formula (I)

wherein n and p are independently integers from 2 to 6,
A at each occurrence is independently oxygen, nitrogen, sulfur or hydrogen, with the proviso that only one of A can be hydrogen at one time,
R is a C₁ to C₃ alkyl group,
m is equal to 0 when A is hydrogen, is 1 when A is oxygen and is 2 when A is nitrogen, or

H₂N-(CH₂)ₘ-N-(R) -H Formula (II)

where m is an integer from 2 to 12 and
R is a C₁ to C₃ alkyl group.

Preferably the polyol has a MW of less than 10,000. More preferably the polyol has a MW of less than 8,000.

Preferred initiators for the production of an autocatalytic polyol include, 3,3'-diamino-N-methyldipropylamine, 2,2'-diamino-N-methyldiethylamine, 2,3-diamino-N-methyl-ethyl-propylamine, N-methyl-1,2-ethanediamine and N-methyl-1,3-propanediamine.

Polyols pre-reacted with polyisocyanates and polyol (b2) with no free isocyanate functions can also be used in the polyurethane formulation. Isocyanate prepolymers based on polyol (b2) can be prepared with standard equipment, using conventional methods, such a heating the polyol (b2) in a reactor and adding slowly the isocyanate under stirring and then adding eventually a second polyol, or by prereacting a first polyol with a diisocyanate and then adding polyol (b2).

Urea, or carbonic acid diamide, is used in a quantity below 0.3 percent by weight based on polyols (b). It is used at a level of at least 0.05 weight percent. The urea is generally dissolved in the polyol (b2) or may be dissolved in water, or in proper solvent, and added to the polyol formulation.

The isocyanates which may be used in the present invention include aliphatic, cycloaliphatic, arylaliphatic and aromatic isocyanates. For the production of slabstock foam, aromatic isocyanates are preferred.

Examples of suitable aromatic isocyanates include the 4,4'-, 2,4' and 2,2'-isomers of diphenylmethane diisocyante (MDI), blends thereof and polymeric and monomeric MDI blends toluene-2,4- and 2,6-diisocyanates (TDI), m- and p-phenylenediisocyanate, chlorophenylene-2,4-diisocyanate, diphenylene-4,4'-diisocyanate, 4,4'-diisocyanate-3,3'-dimehtyldiphenyl, 3-methyldiphenyl-methane-4,4'-diisocyanate and diphenyletherdiisocyanate and 2, 4, 6-triisocyanatotoluene and 2,4,4'-triisocyanatodiphenylether.

Mixtures of isocyanates may be used, such as the commercially available mixtures of 2,4- and 2,6-isomers of toluene diisocyantes. A crude polyisocyanate may also be used in the practice of this invention, such as crude toluene diisocyanate obtained by the phosgenation of a mixture of toluene diamine or the crude diphenylmethane diisocyanate obtained by the phosgenation of crude methylene diphenylamine. TDI/MDI blends may also be used. MDI or TDI based prepolymers can also be used, made either with polyol (b1), polyol (b2) or any other polyol as described heretofore. Isocyanate-terminated prepolymers are prepared by reacting an excess of polyisocyanate with polyols, including aminated polyols or imines/enamines thereof, or polyamines.

Examples of aliphatic polyisocyanates include ethylene diisocyanate, 1,6-hexamethylene diisocyanate (HDI), isophorone diisocyanate (IPDI), cyclohexane 1, 4-diisocyanate, 4,4'-dicyclohexylmethane diisocyanate (H₁₂MDI), saturated analogues of the above mentioned aromatic isocyanates and mixtures thereof.

For the production of flexible foams, the preferred polyisocyanates are the toluene-2,4- and 2,6-diisocyanates or MDI or combinations of TDI/MDI or prepolymers made therefrom.

Isocyanate tipped prepolymer based on polyol (b2) can also be used in the polyurethane formulation.

For producing a polyurethane-based foam, a blowing agent is generally required. In the production of flexible polyurethane foams, water is preferred as the blowing agent. The amount of water is preferably in the range of from 0.5 to 10 parts by weight, more preferably from 2 to 7 parts by weight based on 100 parts by weight of the polyol and even more preferably the water is between 2 and 5 parts per hundred parts polyol. In some applications the water is preferably present in 3 parts by weight of the polyol. In some preferred embodiment, the water is present at of 6 parts or less by weight of the polyol. When water is present at less than 3 parts, a small conventional amine catalyst can be used to enhance the reactivity of the system. The amount of conventional amine catalyst included in such formulations is generally from 0.01 to 0.1 wt% of the polyol. To further reduce the level of volatile amine, such a catalyst is used as less than 0.05 wt% of the polyol. Although not preferred, other blowing agents can be liquid or gaseous carbon dioxide, methylene chloride, acetone, pentane, isopentane, cyclopentane, methylal or dimethoxymethane, dimethylcarbonate. Use of artificially reduced, or increased, atmospheric pressure, such as disclosed in US 5,194,453, or frothing, can also be contemplated with the present invention.

In addition to the foregoing critical components, it is often desirable to employ certain other ingredients in preparing polyurethane polymers. Among these additional ingredients are surfactants, preservatives, flame retardants, colorants, antioxidants, reinforcing agents, stabilizers and fillers, recycled polyurethane powder.

As mentioned above, when low levels of water are used in the formulation, it is desirable to include a conventional amine catalyst. Alternatively, amine and tin catalysts may be included along with the autocatalytic polyol (b2) and the urea to further enhance the reactivity of the system in order to increase the speed of a continuous foam production line or to decrease the mold residence time.

One or more catalysts for the reaction of the polyol with the polyisocyanate can be used. Any suitable urethane catalyst may be used, including tertiary amine compounds, amines with isocyanate reactive groups and organometallic compounds. Preferably the reaction is carried out in the absence of an amine or an organometallic catalyst or a reduced amount as described above. Exemplary tertiary amine catalysts include triethylenediamine; N-methylmorpholine; N,N-dimethylcyclohexylamine; pentamethyldiethylenetriamine; tetramethylethylenediamine; bis (dimethylaminoethyl)ether; 1-methyl-4-dimethylaminoethyl-piperazine; 3-methoxy-N-dimethylpropylamine; N-ethylmorpholine; dimethylethanolamine; N-cocomorpholine; N,N-dimethyl-N',N'-dimethyl isopropylpropylenediamine; N,N-diethyl-3-diethylaminopropylamine and dimethylbenzylamine. Exemplary organometallic catalysts include organomercury, organolead, organoferric and organotin catalysts, with organotin catalysts being preferred among these. Suitable tin catalysts include stannous chloride, tin salts of carboxylic acids such as dibutyltin di-laurate, and stannous octoate, as well as other organometallic compounds such as are disclosed in U.S. Patent 2,846,408. A catalyst for the trimerization of polyisocyanates, resulting in a polyisocyanurate, such as an alkali metal alkoxide may also optionally be employed herein. The amount of amine catalysts can vary from 0.02 to 5 percent in the formulation or organometallic catalysts from 0.001 to 1 percent in the formulation can be used.

In one preferred embodiment of the present invention, the foams are produced with a catalyst package that includes a tin catalyst. Preferably such formulations do not contain a conventional amine catalyst.

In making polyurethane foam, it is generally preferred to employ an amount of a surfactant to stabilize the foaming reaction mixture until it cures. Such surfactants advantageously comprise a liquid or solid organosilicone surfactant. Other surfactants include polyethylene glycol ethers of long-chain alcohols, tertiary amine or alkanolamine salts of long-chain alkyl acid sulfate esters, alkyl sulfonic esters and alkyl arylsulfonic acids. Such surfactants are employed in amounts sufficient to stabilize the foaming reaction mixture against collapse and the formation of large, uneven cells. Typically, 0.2 to 3 parts of the surfactant per 100 parts by weight total polyol (b) are sufficient for this purpose.

A crosslinking agent or a chain extender may be added, if necessary. The crosslinking agent or the chain extender includes low-molecular weight polyhydric alcohols such as ethylene glycol, diethylene glycol, 1,4-butanediol, and glycerin; low-molecular weight amine polyol such as diethanolamine and triethanolamine; polyamines such as ethylene diamine, xlylenediamine, and methylene-bis(o-chloroaniline). The use of such crosslinking agents or chain extenders is known in the art as disclosed in U.S. Patents 4,863,979, 4,883,825 and 4,963,399 and EP 549,120.

When preparing foams for use in transportation, a flame retardant is sometimes included as an additive. Any known liquid or solid flame retardant can be used with the autocatalytic polyols of the present invention. Generally such flame retardant agents are halogen-substituted phosphates and inorganic flame proofing agents. Common halogen-substituted phosphates are tricresyl phosphate, tris(1,3-dichloropropyl phosphate, tris(2,3-dibromopropyl) phosphate and tetrakis (2-cliloroethyl)ethylene diphosphate. Inorganic flame retardants include red phosphorous, aluminum oxide hydrate, antimony trioxide, ammonium sulfate, expandable graphite, urea or melamine cyanurate or mixtures of at least two flame retardants. In general, when present, flame retardants are added at a level of from 5 to 50 parts by weight, preferable from 5 to 25 parts by weight of the flame retardant per 100 parts per weight of the total polyol present.

The applications for foams produced by the present invention are those known in the industry. Flexible, semi-flexible foams and find use in applications such as bedding, furniture, automobile seats, sun visors, armrests, door panels, noise and heat insulation parts.

Processes for producing polyurethane products are well known in the art. In general components of the polyurethane-forming reaction mixture may be mixed together in any convenient manner, for example by using any of the mixing equipment described in the prior art for the purpose such as described in "Polyurethane Handbook", by G. Oertel, Hanser publisher.

The polyurethane products are either produced continuously or discontinuously, by injection, pouring, spraying, casting, calendering, etc; these are made under free rise or molded conditions, with or without release agents, in-mold coating, or any inserts or skin put in the mold. In case of flexible foams, those can be mono- or dual-hardness.

Slabstock foam is conveniently prepared by mixing the foam ingredients and dispensing them into a trough or other region where the reaction mixture reacts, rises freely against the atmosphere (sometimes under a film or other flexible covering) and cures. In common commercial scale slabstock foam production, the foam ingredients (or various mixtures thereof) are pumped independently to a mixing head where they are mixed and dispensed onto a conveyor that is lined with paper or plastic. Foaming and curing occurs on the conveyor to form a foam bun. The resulting foams are typically from about from about 10 kg/m³ to a maximum of 80 kg/m³. A preferred range is from about 10 kg/m³ to 60 kg/m³ and more preferably from about 10 kg/m³ to 50 kg/m³ in density. In an even more preferred embodiment the slabstock foam has a density of 40 kg/m³ or less.

A preferred slabstock foam formulation contains from about 3 to about 6, preferably about 4 to about 5 parts by weight water are used per 100 parts by weight high equivalent weight polyol at atmospheric pressure. At reduced or increased pressure these levels are adjusted accordingly to obtain targeted densities, .i.e., reduced pressure will generally decrease the density.

The following examples are given to illustrate the invention and should not be interpreted as limiting in anyway. Unless stated otherwise, all parts and percentages are given by weight.

A description of the raw materials used in the examples is as follows.
- Niax SC-155: is a silicone based surfactant available from General Electric.
- Tegostab B-2370: is a silicone based surfactant available from Degussa.
- Tegostab B-8715LF: is a silicone based surfactant available from Degussa.
- Kosmos 29: is stannous octoate catalyst available from Degussa.
- Niax A-1: is a tertiary amine catalyst available from General Electric.
- Niax A-300: is a tertiary amine catalyst available from General Electric.
- Dabco 33 LV: is a tertiary amine catalyst available from Air Products and Chemicals Inc.
- Voranol CP 3322: is a triol polyol available from The Dow Chemical Company.
- DEOA: is diethanolamine available.
- Specflex NC 632: is a 1,700 EW polyoxypropylene polyoxyethylene polyol initiated with a blend of glycerol and sorbitol available from The Dow Chemical Company.
- Specflex NC 700: is a styrene-acrylonitrile copolymer polyol available from The Dow Chemical Company
- Polyol A: is a 1,000 equivalent weight propoxylated/ethoxylated tetrol initiated with 3,3'-diamino-N-methyl dipropylamine; EO/PO 12/88 mixed feed.
- Polyol B: is a 1,700 equivalent weight propoxylated tetrol initiated with 3,3'-diamino-N-methyl dipropylamine and capped with 20 wt% ethylene oxide.
- VORANATE T-80: is TDI 80/20 (2,4 to 2,6 isomer ratio) isocyanate available from The Dow Chemical Company.
- Specflex TM 20: is a 80 % Voranate T-80 and 20 % Voranate M-229 (a polymeric MDI) by weight blend available from The Dow Chemical Company.

Foams are made on a continuous, slabstock machine by feeding into the mix-head different streams of polyols, additives, water and isocyanates. For molded foam the preblending of polyols, water and additives, such as surfactants and catalysts, is usually done.

Bench foams or hand mix foams are made by preblending polyol, water, surfactant, catalysts; the isocyanate is added to the blend and the mixture stirred for 5 seconds at 2,000 RPM. Reactants are then poured in a 20 x 20 x 20 cardboard box and allowed to rise freely. All foams are tested according to ASTM D-3574-83 test methods.

### Example 1 and comparative example C1

Foams are produced using a continuous foaming process using the formulations given in Table I.

**Table I**

| Example | 1 | C1 |
|---|---|---|
| Voranol CP 3322 | 94 | 94 |
| Polyol A | 6 | 6 |
| Water | 4.4 | 4.4 |
| Urea | 0.25 | 0 |
| Niax A-1 | 0 | 0.05 |
| Niax SC-155 | 1.2 | 1.2 |
| Kosmos 29 | 0.25 | 0.25 |
| Voranate T-80 index | 107 | 107 |
| Conveyor speed (m/min) | 5.4 | 4.8 |
| Foam density (kg/m3) | 23 | 23 |
| Amine odor | No | slight |

Example 1 is a standard formulation for slabstock foam where the amine catalyst Niax A1 is replaced with 0.25 parts by weight urea. This level of urea was selected as it was expected urea would need to be present at approximately 5 times the weight percent of Niax A-1 to give the same foaming activity. The results show Example 1 unexpectedly has a foam reactivity higher at this level of urea than the control C1. The foam of example 1 also has no noticeable amine odor.

### Example 2 and comparative examples C2, C3 and C4.

The four foams of examples 2, C2, C3 and C4 are made by hand-mixing using the formulations given in Table II.

**TABLE II**

| Example | 2 | C2 | C3 | C4 |
|---|---|---|---|---|
| Polyol A | 6 | 6 | | |
| % Voranol CP 3322 | 94 | 94 | 100 | 100 |
| Water | 4.4 | 4.4 | 4.4 | 4.4 |
| Urea | 0.15 | | 0.15 | |
| Niax A-1 | | 0.05 | | 0.0.5 |
| Dabco 33 LV | | | 0.15 | 0.15 |
| Kosmos 29 | 0.25 | 0.25 | 0.25 | 0.25 |
| Tegostab B 2370 | 1.2 | 1.2 | 1.2 | 1.2 |
| Voranate T-80 index | 107 | 107 | 107 | 107 |
| | | | | |
| Rise time (s) | 62 | 63 | 79 | 63 |

| | | | | |
|---|---|---|---|---|
| 4*, 5* and 6* are comparative foam. Not part of the invention. | | | | |

The data demonstrate the synergy between autocatalytic, amine initiated polyol A and urea. Indeed formulation C3 is slower than formulation C4, while the reactivity of C4 is the same as for the formulations of Examples 2 and C2. The foam of Example 2 is produced in the absence of both Niax A-1 and Dabco 33 LV, two well know fugitive amine catalysts giving foam with VOCs.

### Examples 3 and C5

The formulation of Example 3, given in Table III, containing a reduced amount of water is used for the production of high density foam. The results show urea, in combination with an autocatalytic polyol, is an effective alternative catalyst to conventional fugitive amine catalysts as used in Example C5.

**TABLE III**

| Example | 3 | C5 |
|---|---|---|
| Polyol A | 6 | 6 |
| Voranol CP 3322 | 94 | 94 |
| Water | 3.5 | 3.5 |
| Niax A-1 | 0 | 0.05 |
| Urea | 0.1 | 0 |
| Tegostab B-2370 | 1.2 | 1.2 |
| Kosmos 29 | 0.2 | 0.2 |
| Voranate T-80 | Index 107 | Index 107 |
| Rise time (s) | 86 | 88 |
| Foam density (kg/m3) | 37.7 | 35.3 |

### Example 4 and comparative example C6

Two high resiliency (HR) molded foams are produced by hand mixing the formulations given in Table IV and pouring into a 30 x 30 x 10 cm aluminum mold heated at 60° C. The release agent was Kluber 41-2038 is used and the demold time is 6 minutes. The properties of the resulting foams are reported in table IV.

**TABLE IV**

| Example | 4 | C6 |
|---|---|---|
| Specflex NC 632 | 70 | 70 |
| Specflex NC 700 | 10 | 10 |
| Polyol B | 20 | 20 |
| water | 4.1 | 4.1 |
| DEOA | 0.7 | 0.7 |
| Niax A-1 | | 0.05 |
| Dabco 33 LV | 0.3 | 0.3 |
| Niax A-300 | 0.1 | 0.1 |
| Urea | 0.4 | |
| Tegostab B 8715LF | 0.5 | 0.5 |
| Specflex TM 20 (index) | 85 | 85 |
| | | |
| Mold fill time (s) | 32 | 34 |
| Part weight (g) | 322 | 325 |

## Claims

1. A process for the production of a flexible slabstock foam by reaction of a mixture of
(a) at least one liquid organic polyisocyanate with
(b) a polyol composition comprising;
(b1) from 75 to 99 percent by weight of a polyol or polyol blend having a nominal functionality of 2 to 8 and a hydroxyl number of from 15 to 300 mg KOH/gram; and
(b2) from 1 to 25 percent by weight of at least one polyol compound having a nominal functionality of 2 to 8, a hydroxyl number of from 15 to 800 mg KOH/gram and containing at least one tertiary amine group providing autocatalytic function;
wherein the weight percent of polyol is based on the total amount of polyol composition (b) and the sum of (b1) and (b2) is 100,
(c) from 0.05 to below 0.3 percent urea based on (b);
(d) 0.5 to 10 parts of water based on (b); and
(e) optionally additives or auxiliary agents known per se for the production of polyurethane foams, including catalysts.

2. The process of claim 1 wherein the functionality of polyol component b) is from 2 to 4.

3. The process of claim 1 or 2 wherein the polyol component b1) is a polyether, polyester or a blend thereof.

4. The process of claim 3 wherein the polyol component b1) is a polyether polyol.

5. The process of claim 4. wherein the initiator is 3,3'-diamino-N-methyldipropylamine, 2,2'-diamino-N-methyldiethylamine or 2,3-diamino-N-methyl-ethyl-propylamine.

6. The process of claim 1 wherein the polyol component b2) is
H₂N-(CH₂)ₙ-N-(R)-H Formula (II)
where m is an integer from 2 to 12 and
R is a C₁ to C₃ alkyl group.

7. The process of claim 1 wherein the polyol component is N-methyl-1,2-ethanediamine or N-methyl-1,3-propanediamine.

8. A process for the production of a flexible molded foam by reaction of a mixture of
(a) at least one liquid organic polyisocyanate with
(b) a polyol composition comprising;
(b1) from 0 to 70 percent by weight of a polyol compound having a nominal functionality of 2 to 8 and a hydroxyl number of from 15 to 300 mg KOH/gram; and
(b2) from 30 to 100 percent by weight of at least one polyol compound having a nominal functionality of 2 to 8, a hydroxyl number of from 15 to 300 mg KOH/gram and containing at least one tertiary amine group providing autocatalytic function;
wherein the weight percent of polyol is based on the total amount of polyol composition (b) and the sum of (b1) and (b2) is 100;
(c) from 0.05 to below 0.3 percent urea based on (b);
(d) 0.5 to 10 parts of water based on (b); and
(e) optionally additives or auxiliary agents known per se for the production of polyurethane foams, including catalysts.

9. The process of claim 8 wherein the functionality of polyol component b) is from 2 to 4.

10. The process of claim 8 or 9 wherein the polyol component b1) is a polyether, polyester or a blend thereof.

11. The process of claim 8 or 9 wherein the polyol component b2) is prepared by alkoxylation of at least one initiator molecule of the formula
HₙA- (CH₂)ₙ-N(R) - (CH₂)ₚ-AHₘ Formula (I)
wherein n and p are independently integers from 2 to 6,
A at each occurrence is independently oxygen, nitrogen, sulfur or hydrogen, with the proviso that only one of A can be hydrogen at one time,
R is a C₁ to C₃ alkyl group,
m is equal to 0 when A is hydrogen, is 1 when A is oxygen and is 2 when A is nitrogen.

12. The process of claim 11 wherein the initiator is 3,3'-diamino-N-methyldipropylamine, 2,2'-diamino-N-methyldiethylamine or 2,3-diamino-N-methyl-ethyl-propylamine.

13. The process of claim 8 wherein the polyol component b2) is
H₂N-(CH₂)ₙ-N-(R)-H Formula (II)
where m is an integer from 2 to 12 and
R is a C₁ to C₃ alkyl group.

14. The process of claim 8 wherein the polyol component is N-methyl-1,2-ethanediamine or N-methyl-1,3-propanediamine.

15. A molded flexible foam produced by the process of any one of claims 8 to 14, or a flexible slabstock foam produced by the process of any one of Claims 1 to 7.

## Patentansprüche

1. Ein Vorgang zur Herstellung eines Weichblockschaumstoffs durch Reaktion einer Mischung aus
(a) mindestens einem flüssigen organischen Polyisocyanat mit
(b) einer Polyolzusammensetzung, die Folgendes beinhaltet:
(b1) von 75 bis 99 Gewichtsprozent eines Polyols oder eines Polyolgemischs mit einer nominellen Funktionalität von 2 bis 8 und einer Hydroxylzahl von 15 bis 300 mg KOH/Gramm; und
(b2) von 1 bis 25 Gewichtsprozent von mindestens einer Polyolverbindung mit einer nominellen Funktionalität von 2 bis 8, die eine Hydroxylzahl von 15 bis 800 mg KOH/Gramm aufweist und mindestens eine tertiäre Amingruppe, die eine autokatalytische Funktion bereitstellt, enthält;
wobei sich das Gewichtsprozent von Polyol auf die Gesamtmenge der Polyolzusammensetzung (b) bezieht und die Summe von (b1) und (b2) 100 beträgt;
(c) von 0,05 bis unter 0,3 Prozent Urea bezogen auf (b);
(d) 0,5 bis 10 Teile Wasser bezogen auf (b); und
(e) optional Zusatzstoffe oder Hilfsmittel, die per se für die Herstellung von Polyurethanschäumen bekannt sind, einschließlich Katalysatoren.

2. Vorgang gemäß Anspruch 1, wobei die Funktionalität der Polyolkomponente b) von 2 bis 4 beträgt.

3. Vorgang gemäß Anspruch 1 oder 2, wobei die Polyolkomponente b1) ein Polyether, Polyester oder ein Gemisch daraus ist.

4. Vorgang gemäß Anspruch 3, wobei die Polyolkomponente b1) ein Polyetherpolyol ist.

5. Vorgang gemäß Anspruch 4, wobei der Initiator 3,3'-Diamino-N-methyldipropylamin, 2,2'-Diamino-N-methyldiethylamin oder 2.3-Diamino-N-methyl-ethyl-propylamin ist.

6. Vorgang gemäß Anspruch 1, wobei die Polyolkomponente b2) Folgendes ist
H₂N-(CH₂)ₘ-N-(R)-H Formel (II)
wobei m eine Ganzzahl von 2 bis 12 ist und
R eine C₁- bis C₃-Alkylgruppe ist.

7. Vorgang gemäß Anspruch 1, wobei die Polyolkomponente N-Methyl-1,2-ethandiamin oder N-Methyl-1,3-propandiamin ist.

8. Ein Vorgang zur Herstellung eines biegsamen Formschaumstoffs durch Reaktion einer Mischung aus
(a) mindestens einem flüssigen organischen Polyisocyanat mit
(b) einer Polyolzusammensetzung, die Folgendes beinhaltet:
(b1) von 0 bis 70 Gewichtsprozent einer Polyolverbindung mit einer nominellen Funktionalität von 2 bis 8 und einer Hydroxylzahl von 15 bis 300 mg KOH/Gramm; und
(b2) von 30 bis 100 Gewichtsprozent von mindestens einer Polyolverbindung mit einer nominellen Funktionalität von 2 bis 8, die eine Hydroxylzahl von 15 bis 300 mg KOH/Gramm aufweist und mindestens eine tertiäre Amingruppe, die eine autokatalytische Funktion bereitstellt, enthält;
wobei sich das Gewichtsprozent von Polyol auf die Gesamtmenge der Polyolzusammensetzung (b) bezieht und die Summe von (b1) und (b2) 100 beträgt;
(c) von 0,05 bis unter 0,3 Prozent Urea bezogen auf (b);
(d) 0,5 bis 10 Teile Wasser bezogen auf (b); und
(e) optional Zusatzstoffe oder Hilfsmittel, die per se für die Herstellung von Polyurethanschäumen bekannt sind, einschließlich Katalysatoren.

9. Vorgang gemäß Anspruch 8, wobei die Funktionalität der Polyolkomponente b) von 2 bis 4 beträgt.

10. Vorgang gemäß Anspruch 8 oder 9, wobei die Polyolkomponente b1) ein Polyether, Polyester oder ein Gemisch daraus ist.

11. Vorgang gemäß Anspruch 8 oder 9, wobei die Polyolkomponente b2) durch Alkoxylierung von mindestens einem Initiatormolekül der folgenden Formel zubereitet wird
HₘA-(CH₂)ₙ-N(R)-(CH₂)ₚ-AHₘ Formel (I)
wobei n und p unabhängig Ganzzahlen von 2 bis 6 sind;
A bei jedem Vorkommen unabhängig Sauerstoff, Stickstoff, Schwefel oder Wasserstoff ist, mit der Maßgabe, dass nur ein A zu einem Zeitpunkt Wasserstoff sein kann, R eine C₁- bis C₃-Alkylgruppe ist,
m gleich 0 ist, wenn A Wasserstoff ist, 1 ist, wenn A Sauerstoff ist und 2 ist, wenn A Stickstoff ist.

12. Vorgang gemäß Anspruch 11, wobei der Initiator 3,3'-Diamino-N-methyldipropylamin, 2,2'-Diamino-N-methyldiethylamin oder 2,3-Diamino-N-methyl-ethyl-propylamin ist.

13. Vorgang gemäß Anspruch 8, wobei die Polyolkomponente b2) Folgendes ist
H₂N-(CH₂)ₘ-N-(R )-H Formel (II)
wobei m eine Ganzzahl von 2 bis 12 ist und
R eine C₁- bis C₃-Alkylgruppe ist.

14. Vorgang gemäß Anspruch 8, wobei die Polyolkomponente N-Methyl-1,2-ethandiamin oder N-Methyl-1,3-propandiamin ist.

15. Ein durch den Vorgang gemäß einem der Ansprüche 8 bis 14 hergestellter Weichblockschaumstoff oder ein durch den Vorgang gemäß einem der Ansprüche 1 bis 7 hergestellter Blockschaumstoff.

## Revendications

1. Un procédé pour la production d'une feuille de mousse flexible par réaction d'une mixture
(a) d'au moins un polyisocyanate organique liquide avec
(b) une composition de polyol comprenant ;
(b1) de 75 à 99 pour cent en poids d'un polyol ou d'un mélange de polyols ayant une fonctionnalité nominale de 2 à 8 et un indice d'hydroxyle allant de 15 à 300 mg/KOH/g ; et
(b2) de 1 à 25 pour cent en poids d'au moins un composé polyol ayant une fonctionnalité nominale de 2 à 8, un indice d'hydroxyle allant de 15 à 800 mg/KOH/g et contenant au moins un groupe amine tertiaire procurant une fonction autocatalytique ;
dans lequel le pourcentage en poids de polyol est rapporté à la quantité totale de composition de polyol (b) et la somme de (b1) et (b2) est 100 ;
(c) de 0,05 à en dessous de 0,3 pour cent d'urée rapporté à (b) ;
(d) de 0,5 à 10 parties d'eau rapporté à (b) ; et
(e) facultativement des adjuvants ou des agents auxiliaires connus intrinsèquement pour la production de mousses de polyuréthane, y compris des catalyseurs.

2. Le procédé de la revendication 1 dans lequel la fonctionnalité du composant polyol b) va de 2 à 4.

3. Le procédé de la revendication 1 ou de la revendication 2 dans lequel le composant polyol b1) est un polyéther, un polyester ou un mélange de ceux-ci.

4. Le procédé de la revendication 3 dans lequel le composant polyol b1) est un polyol polyéther.

5. Le procédé de la revendication 4 dans lequel l'amorceur est la 3,3'-diamino-N-méthyldipropylamine, la 2,2'-diamino-N-méthyldiéthylamine ou la 2,3-diamino-N-méthyl-éthyl-propylamine.

6. Le procédé de la revendication 1 dans lequel le composant polyol b2) est
H₂N-(CH₂)ₘ-N-(R)-H Formule (II)
où m est un entier de 2 à 12 et
R est un groupe alkyle en C₁ à C₃.

7. Le procédé de la revendication 1 dans lequel le composant polyol est la N-méthyl-1,2-éthanediamine ou la N-méthyl-1,3-propanediamine.

8. Un procédé pour la production d'une mousse moulée flexible par réaction d'une mixture
(a) d'au moins un polyisocyanate organique liquide avec
(b) une composition de polyol comprenant ;
(b1) de 0 à 70 pour cent en poids d'un composé polyol ayant une fonctionnalité nominale de 2 à 8 et un indice d'hydroxyle allant de 15 à 300 mg/KOH/g ; et
(b2) de 30 à 100 pour cent en poids d'au moins un composé polyol ayant une fonctionnalité nominale de 2 à 8, un indice d'hydroxyle allant de 15 à 300 mg/KOH/g et contenant au moins un groupe amine tertiaire procurant une fonction autocatalytique ;
dans lequel le pourcentage en poids de polyol est rapporté à la quantité totale de composition de polyol (b) et la somme de (b1) et (b2) est 100 ;
(c) de 0,05 à en dessous de 0,3 pour cent d'urée rapporté à (b) ;
(d) de 0,5 à 10 parties d'eau rapporté à (b) ; et
(e) facultativement des adjuvants ou des agents auxiliaires connus intrinsèquement pour la production de mousses de polyuréthane, y compris des catalyseurs.

9. Le procédé de la revendication 8 dans lequel la fonctionnalité du composant polyol b) va de 2 à 4.

10. Le procédé de la revendication 8 ou de la revendication 9 dans lequel le composant polyol b1) est un polyéther, un polyester ou un mélange de ceux-ci.

11. Le procédé de la revendication 8 ou de la revendication 9 dans lequel le composant polyol b2) est préparé par alcoxylation d'au moins une molécule amorceur de la formule
HₘA-(CH₂)ₙ-N(R)-(CH₂)p-AHₘ Formule (I)
où n et p sont indépendamment des entiers de 2 à 6,
A à chaque occurrence est indépendamment l'oxygène, l'azote, le soufre ou l'hydrogène, à condition que seulement un des A puisse être l'hydrogène à la fois ;
R est un groupe alkyle en C₁ à C₃,
m est égal à 0 lorsque A est l'hydrogène, est 1 lorsque A est l'oxygène et est 2 lorsque A est l'azote.

12. Le procédé de la revendication 11 dans lequel l'amorceur est la 3,3'-diamino-N-méthyldipropylamine, la 2,2'-diamino-N-méthyldiéthylamine ou la 2-diamino-N-méthyl-éthyl-propylamine.

13. Le procédé de la revendication 8 dans lequel le composant polyol b2) est
H₂N-(CH₂)ₘ-N-(R)-H Formule (II)
où m est un entier de 2 à 12 et
R est un groupe alkyle en C₁ à C₃.

14. Le procédé de la revendication 8 dans lequel le composant polyol est la N-méthyl-1,2-éthanediamine ou la N-méthyl-1,3-propanediamine.

15. Une mousse flexible moulée produite par le procédé de l'une quelconque des revendications 8 à 14, ou une feuille de mousse flexible produite par le procédé de l'une quelconque des revendications 1 à 7.
